Europäisches Patentamt

European Patent Office

Office européen des brevets

(11) Publication number: **0 090 274**
**B1**

(12) **EUROPEAN PATENT SPECIFICATION**

(45) Date of publication of patent specification: **28.09.88**

(51) Int. Cl.⁴: **B 24 D 7/00**

(21) Application number: **83102644.8**

(22) Date of filing: **17.03.83**

(54) Abrasive element obtained by electrolytic deposit of diamond.

(30) Priority: **25.03.82 IT 2039182**

(43) Date of publication of application:
**05.10.83 Bulletin 83/40**

(45) Publication of the grant of the patent:
**28.09.88 Bulletin 88/39**

(84) Designated Contracting States:
**BE DE FR GB SE**

(56) References cited:
**FR-A- 441 211**
**FR-A-1 265 542**
**GB-A- 563 109**
**GB-A-1 048 934.**
**US-A-2 194 546**
**US-A-2 442 129**
**US-A-2 858 256**
**US-A-3 343 308**
**US-A-3 869 263**
**US-A-4 114 322**

(73) Proprietor: **DIAMOND PAUBER S.r.l.**
**Via Bordigona, 26**
**I-54100 Massa (IT)**

(72) Inventor: **Bernieri, Paolo**
**Via Fosdinovo, 11**
**Marina Di Massa (IT)**

(74) Representative: **Faggioni, Giovanmaria, Dr. et al**
**Fumero-Studio Consulenza Brevetti**
**Widenmayerstrasse 4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

As known, the so-called "diamond" elements—i.e. elements formed of small diamond chips incorporated into a consumable metallic support—have been used for some years for the cutting of marble or stone blocks or, in general, for other operations to be performed on said materials.

For instance, for cuts in a cave, "diamond wire" is used. A wire of this type is described in the FR—A—1265542, wherein use is made of ring discs, welded along a highly resisting and suitably flexible steel wire. The ring discs have a contour shaped like the beak of a flute, forming a cutting lip with a specific relief angle. This arrangement has proved to be very fragile when used for cutting stones, both because the cutting action on the stone determines severe wear and thus a rapid flattening of the cutting lip, and because the working conditions in a cave are very hard and the flute beak can easily get struck and thus be seriously damaged. On the other hand, it is practically unthinkable to regrind the ring discs once they been mounted and welded onto the flexible steel wire, whereby nowadays it is preferred to use metallic "pins", which are small cylinders with a diameter of 8 to 10 mm and a height of 8 to 12 mm, having a central hole of 4 to 5 mm and being inserted and blocked on said steel wire. Such pins are possibly spaced one from the other by metal or plastic spacers, which are in turn inserted and blocked onto the steel wire. The outer surface of the pins is covered with a lining of abrasive diamond, i.e. very tiny diamond chips, applied by electrolytic or chemical deposit, or by sintering.

The remarks which have been made in connection with the use of diamond in the heretofore specified ways, are essentially the following:

—in any "diamond" element, anyhow obtained, the abrasive cutting function is exclusively performed by the diamond, while the metallic material—of electrolytic deposit or of sintering—purely has the function of supporting the diamond. The choice of this binding material is very important, since the efficiency and life of the "diamond" element depend therefrom. In actual fact, during the cutting operation, the diamond may possibly get blunt, but it will not wear out (as it is obviously harder than the marble or stone to be cut), whereas the wear or consumption of the binding material, by gradually laying the diamond bare, causes its breaking-off and loss. For this reason, while on one hand it is preferred to utilize a soft metal, which opposes a minimum resistance to wear and thus allows the diamond to work in optimal conditions, even though it causes a very rapid consumption of the "diamond" element, on the other hand it is preferred to utilize a hard metal, which has the advantage of slowing down consumption even though, on the contrary, it partly hampers a proper work of the diamond;

—the use of a soft metal, as bronze or a bronze alloy, has therefore been generally adopted in manufacturing sintered "diamond" elements, wherein a gradual consumption of the metal is actually required to lay bare successive diamond layers, as the diamond surface layer breaks off. Thanks to this structure, the useful life—i.e. the endurance—of a sintered diamond element is very long. Sintered "diamond" segments, in spite of the minor intrinsic resistance to wear of the consuming metal, keep in fact their efficiency longer in time for the very reason that, as a first thin layer of the segment wears off, the diamond of a underlying layer is laid bare, so as to always have a renewed cutting surface, and this continues up to consumption of the full thickness of the segment;

—the use of a hard metal, as nickel, has instead been generally adopted in manufacturing by electrolytic deposit, in particular "pins" for "diamond" wire, wherein a very thin and practically single layer of diamond chips or grains is applied onto a metallic support, whereby it is absolutely indispensable for the bond to be as strong as possible. It has however been noted that this diamond electrolytic deposit, which should in theory be preferable for its actual high resistance to wear, has nevertheless a relatively short useful life. The reason for this limited life is to be sought in the fact that the thin diamond layer is applied electrolytically onto a surface of the metallic support element which lies and works parally to the surface to be cut, i.e. the surface subjected to the abrasive or cutting action, so that said thin layer, being subjected to wear simultaneously throughout its whole surface, breaks off entirely in a short while.

The object of the present invention is to realize an abrasive "diamond" element, combining the advantages of the two heretofore described techniques, namely providing:

—a high intrinsic resistance to wear, due to the fact that the diamond is bound electrolytically; and

—furthermore, a long life due to the fact that it allows to dispose of a renewable cutting surface, i.e. to utilize successive diamond layers.

According to the invention, in a abrasive diamond element having the form of a pin, which in association with a wire forms a cutting tool for cutting stone material or marble by sliding parally to the surface to be cut, said abrasive element consisting of a small cylindrical pin with axis coinciding with that of the wire and of a collar portion having its surface totally coated with an electrolytically deposited metal layer incorporating diamond chips, the above results are obtained due to the fact that at least part of the collar surface is corrugated or radially diverging in respect of the axis of the cylinder, said coated collar cutting surface wearing away in use to reveal a new cutting surface in axial direction.

Preferred embodiments of the present invention are described in the following with reference to the accompanying drawings, in which:

Fig. 1 is an axial cross-section view of a "pin" of known technique, for "diamond wire";

Fig. 2 is an axial cross-section view of a "pin" realized according to the invention;

Fig. 2a is a view similar to that of Figure 2, with the "pin" partially consumed; and

Fig. 3 is an axial cross-section view of a different embodiment of the "pin" according to the invention.

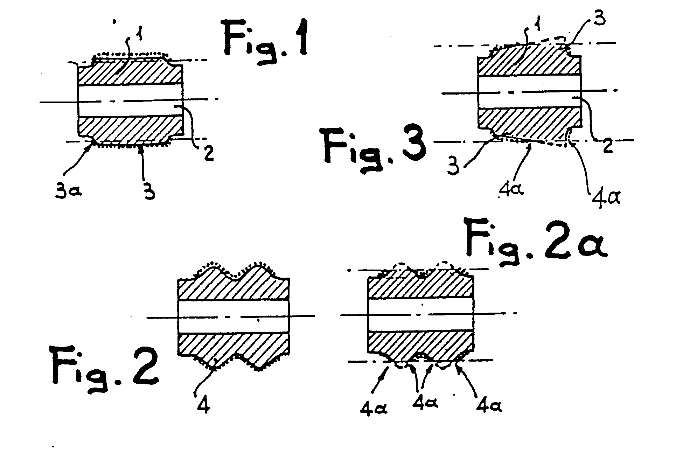

Figure 1 illustrates the known technique for the production of "pins" for "diamond wire". The pin according to known technique is formed of a small cylinder 1, having an axial hole 2 through which it is inserted on the steel support wire (not shown) and being blocked thereon by known means (also not shown), and of a collar 3, also having an outer cylindrical surface slightly projecting from the outer surface of the cylinder 1, said collar being lined—on its outer surface as well as on its shoulders 3a—with abrasive diamond. This lining is obtained by electrolytic deposit.

In such a pin of known technique, the wear deriving from normal work simultaneously affects the whole cylindrical surface of the collar. Consequently, once the thin layer of abrasive lining is consumed (as shown by the dotted line in Figure 1), or once the diamond has got blunt or has become smooth, the pin is no longer apt to perform practically any cutting function.

In the pin realized according to the invention, the collar 4 has—as opposed to that of known technique—a corrugated profile. In the embodiment shown in Figures 2 and 2a, the collar 4 has a double-crown profile, so as to form several inclined surfaces in respect of an ideal working surface, parallel to the cutting plane X—X (as clearly shown in these figures). With such a profile, as the collar wears off, the diamond present along the edges 4a (Figure 2a), which has not yet been affected by wear, shows up. This obviously produces a continuously renewable cutting surface.

Also in the embodiment of Figure 3, wherein the collar 3 has a frustonconical shape, the same result is obtained: as the collar wears off, in correspondence of its part of major diameter, the diamond which has not been previously involved in the cutting action is laid bare.

In practice, therefore—as opposed to known technique, wherein a relatively wide abrasive surface is entirely affeced by wear and rapidly ends its function—the pin realized according to the invention has several cutting edges, which wear more progressively, thereby exposing to the cut a continuously renewed diamond surface.

This evenness of consumption is not hindered by the resistance to wear of the material forming the collar, in that said material consists of relatively soft metal.

The diamond pins realized according to the present invention and illustrated by way of example in the accompanying drawings, allow to attain:

—besides the already mentioned principal advantage of disposing of cutting edges whereon the diamond is progressively renewed, also

—the advantage of obtaining, with the same dimensions as the diamond pins of known technique, far higher specific pressures of the diamond along the cutting line than in known technique.

**Claims**

1. Diamond abrasive element in the form of a pin, which in association with a wire forms a cutting tool for cutting stone material or marble by sliding parally to the surface to be cut, said abrasive element consisting of a small cylindrical pin with axis coinciding with that of the wire and of a collar portion having its surface totally coated with an electrolytically deposited metal layer incorporating diamond chips, characterized in that, at least par of the collar surface is corrugated or radially diverging in respect of the axis of the cylinder, said coated collar cutting surface wearing away in use to reveal a new cutting surface in the axial direction.

2. Diamond element according to claim 1, wherein said collar portion of the cylindrical pin has a frustoconical shape.

3. Diamond element according to claim 1, wherein said collar portion has a corrugated profile.

4. Diamond element according to claim 3, wherein the profile of said collar portion has a double crowning in the axial direction.

**Patentansprüche**

1. Diamant-Schleifelement in Form eines "Diamantstiftes" zur Verwendung mit einem Schneidwerkzeug wie einem "Diamantdraht" zum Schneiden von Stein oder Marmor durch Verschieben parallel zu der zu schneidenden Fläche, wobei das Diamant-Schleifelement aus einem kleinen Zylinder, dessen Achse mit derjenigen des Diamantdrahtes zusammenfällt und einem Kragenabschnitt, dessen Oberfläche vollständig mit einem Diamantpartikel aufweisenden, elektrolytisch aufgebrachten Metallschicht besteht, dadurch gekennzeichnet, daß wenigstens ein Teil der Kragenfläche so angeordnet ist, daß es einen Winkel in Bezug auf die Achse des Zylinders bildet und wobei die Oberfläche eine erneuerbare Schneidfläche bildet.

2. Diamantelement nach Anspruch 1, wobei der Kragenabschnitt des Zylinders kegelstumpfförmig ist.

3. Diamantelement nach Anspruch 1, wobei der Kragenabschnitt ein gefurchtes Profil hat.

4. Diamantelement nach Anspruch 3, wobei das Profil des Kragenabschnitts in axialer Richtung als Doppelkrone ausgebildet ist.

**Revendications**

1. Elément abrasif à diamant possédant la forme d'une broche qui, en association avec un fil, forme un outil de coupe servant à tailler la pierre ou le marbre au moyen d'un glissement exécuté parallèlement à la surface devant être taillée, ledit élément abrasif étant constitué par une petite broche cylindrique dont l'axe coïncide avec celui du fil et une partie formant collet dont la surface est entièrement recouverte par une couche métallique déposée par voie électrolytique et contenant des éclats de diamant, caractérisé en ce qu'au moins une partie de la surface du collet est nervurée ou possède une forme divergeant radialement par rapport à l'axe du cylindre, ladite surface de coupe du collet recouvert s'usant en cours d'utilisation en présentant une nouvelle surface de couple dans la direction axiale.

2. Elément à diamant selon la revendication 1, dans lequel ladite partie, en forme de collet, de la broche possède une forme tronconique.

3. Elément à diamant selon la revendication 1, dans lequel ladite partie en forme de collet possède un profil nervuré.

4. Elément à diamant selon la revendication 3, dans lequel ladite partie en forme de collet possède un double bombement dans la direction axiale.

Fig.1

Fig.3

Fig.2α

Fig.2